# EUROPEAN PATENT APPLICATION

(11) **EP 4 835 334 A1**
(43) Date of publication of application: **04.11.2026**
(21) Application number: 25744586.6
(22) Date of filing: 21.01.2025
(51) Int. Cl.: F16K 3/18, F16K 31/50, F16K 27/08

(54) **ELECTRIC VALVE**

(30) Priority: 23.01.2024 CN 202410096182
(71) Applicant: Zhejiang Dunan Artificial Environment Co., Ltd., Shaoxing, Zhejiang 311835 (CN)
(72) Inventor: YU, Zhou, Shaoxing, Zhejiang 311835 (CN); WANG, Weijia, Shaoxing, Zhejiang 311835 (CN); MA, Yanting, Shaoxing, Zhejiang 311835 (CN)
(74) Representative: Zacco GmbH
(86) International application number: PCT/CN2025/073742
(87) International publication number: WO 2025/157147

(57) **Abstract**

An electric valve, comprising: a valve body (01) provided with a valve cavity, a first communication hole (012) and a second communication hole (013), the first communication hole and the second communication hole being separately communicated with the valve cavity; a valve core assembly, comprising a connecting rod component and a valve core component (30), the connecting rod component being movably arranged in the valve cavity, the valve core component (30) being mounted on the connecting rod component, and the valve core component (30) moving in the valve cavity along with the connecting rod component, so as to communicate the first communication hole with the second communication hole or partition the first communication hole from the second communication hole; a rotor component (40), located at the end of the connecting rod component away from the valve core component, the rotor component (40) being rotatably arranged in the valve cavity; and a connecting member (50), one end of the connecting member (50) being fixedly arranged on the rotor component, and the other end of the connecting member (50) being in threaded fit with the connecting rod component, so as to drive the connecting rod component to move in the valve cavity, the connecting member being limited in the axial direction of the valve cavity relative to the valve body. The electric valve can solve the problems in the prior that when a valve core assembly is driven by a piston component, the structure of the piston component is complex and the operation convenience is poor.

## Description

The present disclosure claims priority to a patent application with application no. 2024100961820, entitled "Electric Valve", and filed to the China National Intellectual Property Administration on January 23, 2024.

### Technical Field

The present disclosure relates to the technical field of electric valves, and in particular to an electric valve.

### Background

An electric valve usually includes a valve body, a piston component, and a valve core assembly. The valve body is provided with a valve cavity, a first communication hole, and a second communication hole. The first communication hole and the second communication hole are respectively in communication with the valve cavity. The valve core assembly is movably disposed in the valve cavity to communicate the first communication hole with the second communication hole or partition the first communication hole from the second communication hole. The piston component is disposed in the valve cavity. The piston component is in driving fit with the valve core component so as to drive the valve core assembly to move.

The valve core assembly is driven to move by using the piston component. A high-pressure medium needs to be introduced to a side of the piston component, and a pressure difference is formed on both sides of the piston component to drive the valve core assembly to move. However, a structure design of the piston component is relatively cumbersome, and a driving manner of driving the valve core assembly to move by forming the pressure difference is poor.

### Summary

The present disclosure provides an electric valve, so as to solve a problem in the prior art that a driving manner for a valve core assembly is poor in convenience.

The present disclosure provides an electric valve. The electric valve includes: a valve body, provided with a valve cavity, a first communication hole, and a second communication hole, where the first communication hole and the second communication hole are respectively in communication with the valve cavity; a valve core assembly, including a connecting rod component and a valve core component, where the connecting rod component is movably disposed in the valve cavity; the valve core component is mounted on a guide bracket, and the valve core component moves in the valve cavity along with the connecting rod component, so as to communicate the first communication hole with the second communication hole or partition the first communication hole from the second communication hole; a rotor component, located at an end that is of the connecting rod component and that is away from the valve core component, where the rotor component is rotatably disposed in the valve cavity; and a connecting member, where an end of the connecting member is fixedly disposed on the rotor component, and an other end of the connecting member is in threaded fit with the connecting rod component, so as to drive the connecting rod component to move in the valve cavity, and the connecting member is limited in the axial direction of the valve cavity relative to the valve body.

Further, the connecting rod component includes a connection rod and a guide bracket that are sequentially arranged in a direction from the rotor component to the valve core component, the connection rod is fixedly connected to the guide bracket, the connection rod is in threaded fit with the connecting member, and the valve core component is mounted on the guide bracket.

Further, the electric valve further includes: a valve cover, disposed in the valve cavity, where the connection rod is in guiding fit with the valve cover.

Further, a through hole is provided on the valve cover, the through hole passes through the valve cover along the axial direction of the valve cavity, the connection rod is movably inserted into the through hole, and the connection rod is in guiding fit with the through hole.

Further, a first anti-rotation structure is disposed on a sidewall of the through hole, a second anti-rotation structure is disposed on a sidewall of the connection rod, and the first anti-rotation structure is in anti-rotation fit with the second anti-rotation structure.

Further, the valve cover separates the valve cavity into a first chamber and a second chamber that are distributed along the axial direction, the rotor component is located in the first chamber, and the valve core component is located in the second chamber.

Further, a first balance channel is formed between the connection rod and the through hole, and two ends of the first balance channel are respectively in communication with the first chamber and the second chamber.

Further, a second balance channel is provided on the valve cover, the second balance channel is disposed eccentrically to the through hole, and two ends of the second balance channel are respectively in communication with the first chamber and the second chamber.

Further, the through hole includes a guide hole and an avoidance hole that are in communication sequentially in a direction from the connection rod to the connecting member, an aperture size of the guide hole is smaller than an aperture size of the avoidance hole, the guide hole is in guiding fit with the connection rod, and an end of the connecting member away from the rotor component is inserted into the guide hole through the avoidance hole and is in threaded fit with the connection rod.

Further, the electric valve further includes a bearing, disposed in the avoidance hole, where the connecting member is rotatably inserted into the bearing, and an outer peripheral surface of the connecting member is connected to an inner ring of the bearing.

Further, a limiting portion is disposed on the connecting member, and the electric valve further includes: an elastic component, disposed on the connecting member, where the bearing is located between the elastic component and the limiting portion, the elastic component and the limiting portion respectively abut against the bearing, and the elastic component is configured to exert an elastic force to the connecting member, so that the limiting portion on the connecting member is in contact with the bearing.

Further, the electric valve further includes: a valve seat, disposed in the valve cavity, where the valve seat is in guiding fit with the valve core component.

Further, a mounting port is provided on the guide bracket, the valve core component includes a first valve core and a second valve core that are mutually independent, the first valve core and the second valve core are respectively mounted in the mounting port, the first valve core abuts against the second valve core, the first valve core is disposed in correspondence with the first communication hole, and the second valve core is disposed in correspondence with the second communication hole.

Further, the connecting rod component is in limiting fit with the valve cover, so as to limit a displacement travel of the connecting rod component in the axial direction of the valve cavity.

Further, a step plane is disposed on a sidewall of the connecting rod component, and the step plane is configured to be in limiting fit with the valve cover.

Further, the first communication hole and the second communication hole are respectively in communication with a side portion of the valve cavity, and along the axial direction of the valve cavity, an end of the guide bracket away from the connection rod protrudes out of the valve core component, and the end of the guide bracket away from the connection rod is configured to be in limiting fit with an end of the valve cavity away from the rotor component.

By using the technical solution of the present disclosure, the connecting member is limited in the axial direction of the valve cavity relative to the valve body. Rotation of the rotor component drives rotation of the connecting member, that is, the connecting member does not move in the axial direction of the valve cavity relative to the valve body. The connecting member drives the connecting rod component to rotate and move along the axial direction of the valve cavity. In a process in which the connecting rod component moves, the valve core component is driven to move along the axial direction of the valve cavity, so that the valve core component communicates the first communication hole with the second communication hole or partitions the first communication hole from the second communication hole. In conventional technical solutions, a high-pressure medium needs to be introduced to a side of a piston component, and a pressure difference is formed on both sides of the piston component to drive the valve core assembly to move. However, a structure design of the piston component is relatively cumbersome, and a driving manner of driving the valve core assembly to move by forming the pressure difference is poor in convenience. Compared with the conventional technical solution, in this solution, the connecting rod component is driven by the rotor component and the connecting member to drive the valve core component to move along the axial direction of the valve cavity, so as to implement communication or partition between the first communication hole and the second communication hole, and implement a zero-pressure differential switching valve. A structure is relatively simple, and operation is relatively convenient.

### Brief Description of the Drawings

Drawings of the specification, which form a part of the present disclosure, are used for providing further understanding of the present disclosure, and schematic embodiments and description thereof in the present disclosure are used for explaining the present disclosure and are not to be construed as an undue limitation of the present disclosure. In the drawings,
Fig. 1 shows a structure diagram when a first communication hole and a second communication hole of an electric valve are in communication according to an embodiment of the present disclosure;
Fig. 2 shows a structure diagram when a first communication hole and a second communication hole of an electric valve are partitioned according to an embodiment of the present disclosure;
Fig. 3 shows a structure diagram of a connecting rod component according to an embodiment of the present disclosure;
Fig. 4 shows a section view of a connecting rod component from a first perspective according to an embodiment of the present disclosure;
Fig. 5 shows a section view of a connecting rod component from a second perspective according to an embodiment of the present disclosure;
Fig. 6 shows a top view of a connecting rod component according to an embodiment of the present disclosure;
Fig. 7 shows a structure diagram of a guide bracket according to an embodiment of the present disclosure;
Fig. 8 shows a front view of a guide bracket according to an embodiment of the present disclosure;
Fig. 9 shows a section view of one valve cover according to an embodiment of the present disclosure;
Fig. 10 shows a top view of a valve cover in Fig. 9;
Fig. 11 shows a section view of another valve cover according to an embodiment of the present disclosure; and
Fig. 12 shows a top view of a valve cover in Fig. 11.

The drawings include the following reference numerals in the drawings:
01: valve body;
0111: first chamber; 0112: second chamber;
012: first communication hole; 013: second communication hole;
014: first sleeve; 015: second sleeve;
10: connection rod; 1001: second anti-rotation surface;
101: mounting groove; 102: snap-fit portion; 103: first limiting structure;
11: connecting rod;
12: connecting block;
20: guide bracket; 201: mounting port; 202: snap-fit hole; 203: second limiting structure;
21: first plate body; 22: second plate body;
30: valve core component;
31: first valve core; 32: second valve core; 33: elastic portion;
40: rotor component;
50: connecting member; 501: limiting portion;
60: valve cover;
601: through hole; 6010: first anti-rotation surface; 6011: guide hole; 6012: avoidance hole; 6013: groove structure;
602: second balance channel;
70: bearing;
80: elastic component; and
90: valve seat.

### Detailed Description of the Embodiments

The following clearly and completely describes the technical solutions in the embodiments of the present disclosure with reference to the drawings in the embodiments of the present disclosure. Apparently, the described embodiments are only part rather than all of the embodiments of the present disclosure. The following description of at least one example embodiment is merely illustrative and definitely is not construed as any limitation on the present application and use of the present application. All other embodiments obtained by those skilled in the art based on embodiments of this specification without creative efforts shall fall within the protection scope of the present disclosure.

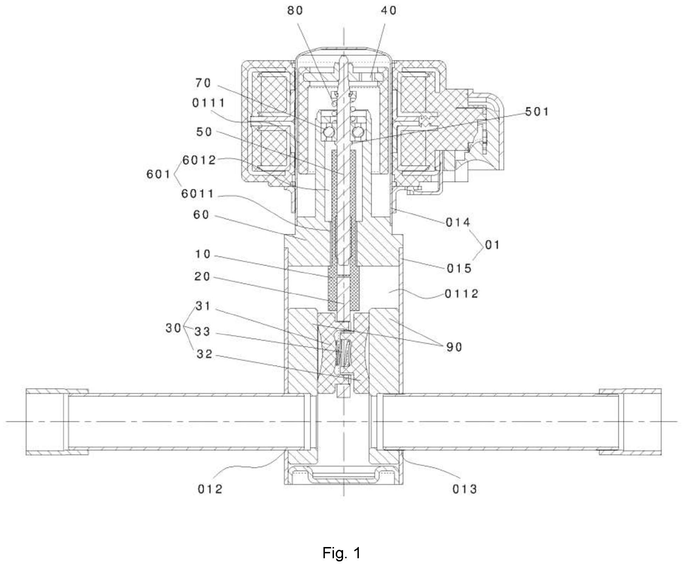

As shown in Fig. 1 to Fig. 3, an embodiment of the present disclosure provides an electric valve. The electric valve includes a valve body 01, a valve core assembly, a rotor component 40, and a connecting member 50. The valve body 01 is provided with a valve cavity, a first communication hole 012, and a second communication hole 013, where the first communication hole 012 and the second communication hole 013 are respectively in communication with the valve cavity. The valve core assembly includes a connecting rod component and a valve core component 30, and the connecting rod component is movably disposed in the valve cavity. The valve core component 30 is mounted on the connecting rod component, and the valve core component 30 moves in the valve cavity along with the connecting rod component, so as to communicate the first communication hole 012 with the second communication hole 013 or partition the first communication hole from second communication hole. The rotor component 40 is located at an end that is of the connecting rod component and that is away from the valve core component 30, where the rotor component 40 is rotatably disposed in the valve cavity. An end of the connecting member 50 is fixedly disposed on the rotor component 40, and an other end of the connecting member 50 is in threaded fit with the connecting rod component, so as to drive the connecting rod component to move in the valve cavity, and the connecting member 50 is limited in the axial direction of the valve cavity relative to the valve body 01.

By using the technical solution of the present disclosure, the connecting member 50 is limited in the axial direction of the valve cavity relative to the valve body 01, that is, the connecting member 50 does not move in the axial direction of the valve cavity relative to the valve body 01. Rotation of the rotor component 40 drives rotation of the connecting member 50. The connecting member 50 drives the connecting rod component to rotate and move along the axial direction of the valve cavity. In a process in which the connecting rod component moves, the valve core component 30 is driven to move along the axial direction of the valve cavity, so that the valve core component 30 communicates the first communication hole 012 with the second communication hole 013 or partitions the first communication hole from the second communication hole. In conventional technical solutions, a high-pressure medium needs to be introduced to a side of a piston component, and a pressure difference is formed on both sides of the piston component to drive the valve core assembly to move. However, a structure design of the piston component is relatively cumbersome, and a driving manner of driving the valve core assembly to move by forming the pressure difference is poor in convenience. Compared with the conventional technical solutions, in this solution, the connecting rod component is driven by the rotor component 40 and the connecting member 50 to drive the valve core component 30 to move along the axial direction of the valve cavity, so as to implement communication or partition between the first communication hole 012 and the second communication hole 013. A structure is relatively simple, and operation is relatively convenient.

Further, the connecting rod component includes a connection rod 10 and a guide bracket 20 that are sequentially arranged in a direction from the rotor component 40 to the valve core component 30, and the connection rod 10 is fixedly connected to the guide bracket 20. The connection rod 10 is in threaded fit with the connecting member 50, and the valve core component 30 is mounted on the guide bracket 20. A specific connection manner of the connection rod 10 and the guide bracket 20 is not limited in this solution, and a fixed connection can be implemented in fastener, snap-fit, welding and other manners.

In the connecting rod component of an embodiment, a first end of the connection rod 10 is injection-molded onto the guide bracket 20. In this way, a possibility of loosening a connection between the connection rod 10 and the guide bracket 20 can be reduced, stability of the connection between the connection rod 10 and the guide bracket 20 can be improved, and stability of the valve core component 30 in a moving process can be improved. If the connection rod is mutually connected to the guide bracket by means of fasteners, the fasteners are prone to loosening after being used for a long time, which affects the stability of the connection between the connection rod and the guide bracket. Setting of this embodiment can improve the stability of the connection between the connection rod 10 and the guide bracket 20, and the connection rod 10 is injection-molded onto the guide bracket 20, so that convenience of assembling the connection rod is higher.

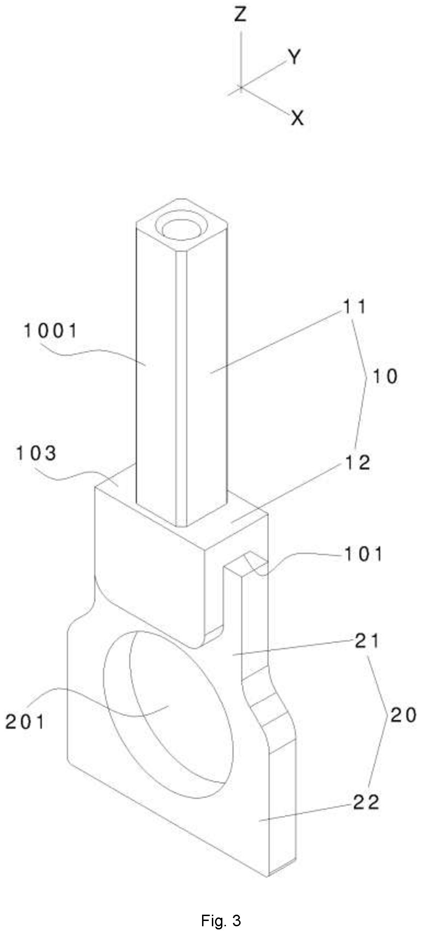

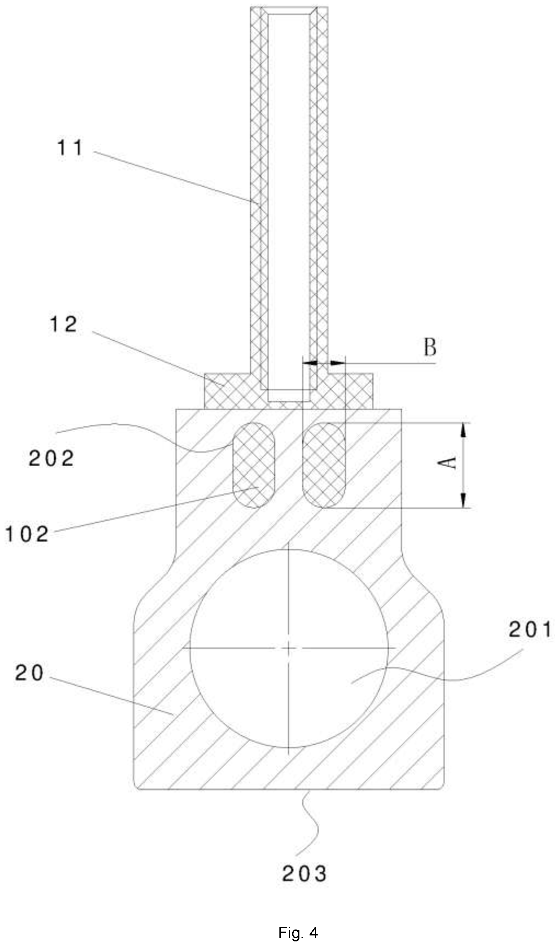

As shown in Fig. 3 and Fig. 4, in an embodiment, the guide bracket 20 is a plate-like structure, a length direction of the guide bracket 20 is consistent with that of the connection rod 10, and a width direction of the guide bracket 20 is perpendicular to that of the connection rod 10. In Fig. 3, a Z direction is length directions of the connection rod 10 and the guide bracket 20, an X direction is width directions of the connection rod 10 and the guide bracket 20, and a Y direction is thickness directions of the connection rod 10 and the guide bracket 20.

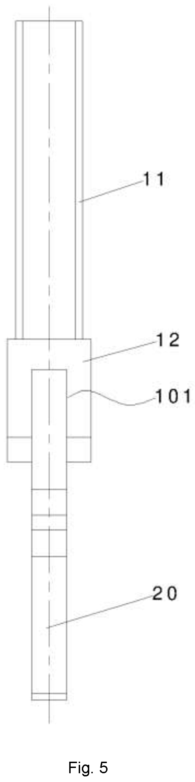

As shown in Fig. 3 to Fig. 5, in an embodiment, a mounting groove 101 is provided on an end face of the first end of the connection rod 10, and an end of the guide bracket 20 is inserted into the mounting groove 101 and is connected to the connection rod 10. In this way, a contact area between the connection rod 10 and the guide bracket 20 can be increased, thereby further improving the stability of the connection between the connection rod 10 and the guide bracket 20.

Further, a snap-fit structure is disposed between the connection rod 10 and the guide bracket 20, and the connection rod 10 and the guide bracket 20 are snap-fitted by using the snap-fit structure. Setting of the snap-fit structure can further reduce a possibility of the partition between the connection rod 10 and the guide bracket 20, thereby further improving the stability of the connection between the connection rod 10 and the guide bracket 20.

A specific form of the snap-fit structure is not limited in this solution.

In an embodiment of this solution, the snap-fit structure includes a snap-fit hole 202 and a snap-fit portion 102 that are snap-fitted to each other. A shape of the snap-fit portion 102 matches that of the snap-fit hole 202. The snap-fit hole 202 is provided on an end that is of the guide bracket 20 and that is inserted into the mounting groove 101. The snap-fit portion 102 is disposed in the mounting groove 101 and integrally formed with the connection rod 10, where the snap-fit portion 102 is inserted into the snap-fit hole 202 and is snap-fitted to the snap-fit hole 202.

In other embodiments of this solution, the snap-fit hole 202 is provided on a sidewall of the mounting groove 101. The snap-fit portion 102 is disposed on a sidewall of an end that is of the guide bracket 20 and that is inserted into the mounting groove 101. The snap-fit portion 102 and the guide bracket 20 are integrally formed. The snap-fit portion 102 is snap-fitted to the snap-fit hole 202.

A specific shape of the snap-fit hole 202 is not limited in this solution, and can be disposed in a structure such as a circular hole, an irregularly-shaped hole, or a polygonal hole.

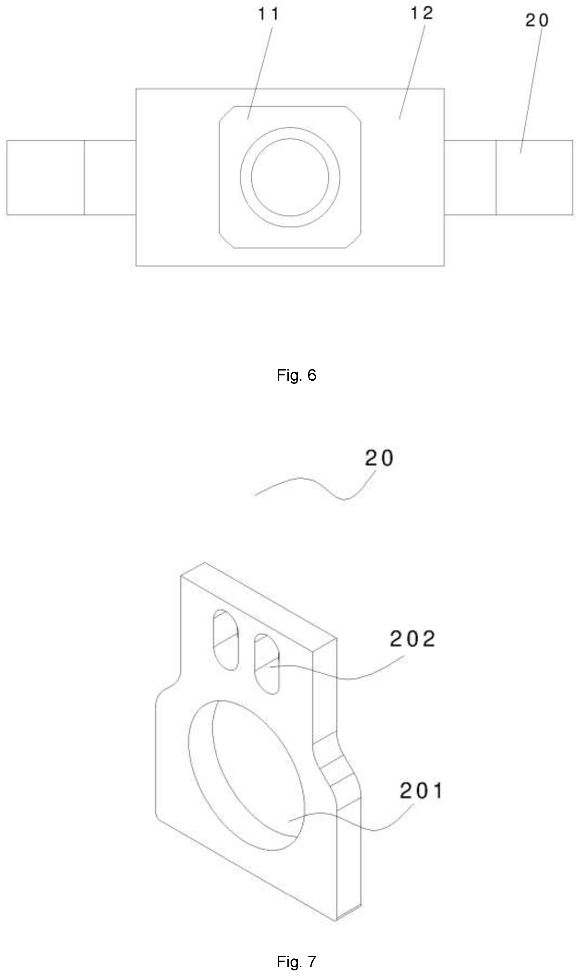

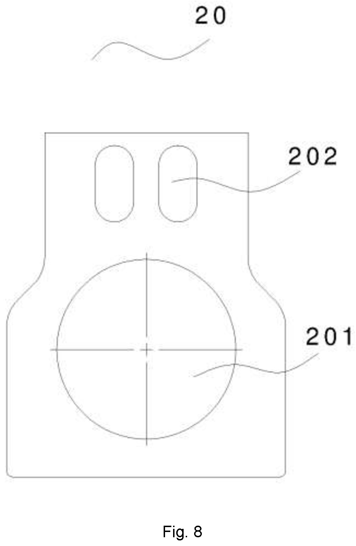

As shown in Fig. 4, Fig. 7, and Fig. 8, in an embodiment, the snap-fit hole 202 is a waist-type hole. A length direction of the waist-type hole is consistent with that of the connecting rod component. A size A of the waist-type hole along a length direction of the connecting rod component is greater than a size B of the waist-type hole along a width direction of the connecting rod component. In this way, a tensile force of a pull rod component can be increased. In addition, a size of the waist-type hole along the length direction of the connecting rod component is greater than that along the width direction of the connecting rod component. In this way, space occupied by the snap-fit hole 202 in the width direction of the guide bracket 20 can be saved.

Further, a specific quantity of the snap-fit structures is not limited in this solution. In this embodiment, two snap-fit structures are disposed, and the two snap-fit structures are distributed at intervals along the width direction of the guide bracket 20.

As shown in Fig. 3 to Fig. 6, in this embodiment, the connection rod 10 includes a connecting rod 11 and a connecting block 12 that are sequentially arranged along the length direction. A cross-sectional area of the connecting block 12 is greater than that of the connecting rod 11. The mounting groove 101 is provided on an end face of an end that is of the connecting rod 11 and that is away from the connecting block 12. In this way, structural strength of the connecting block 12 can be ensured, and the stability of the connection between the connection rod 10 and the guide bracket 20 can be improved.

As shown in Fig. 3 to Fig. 5, further, both ends of the mounting groove 101 respectively extend to two end faces of the connecting block 12 along the width direction of the connecting rod component. The guide bracket 20 includes a first plate body 21 and a second plate body 22 that are sequentially disposed along the length direction, and a width of the first plate body 21 is less than that of the second plate body 22. The snap-fit hole 202 is provided on the first plate body 21, and the first plate body 21 is inserted into the mounting groove 101. Along the width direction of the guide bracket 20, two ends of the first plate body 21 are respectively located outside the mounting groove 101. In this way, convenience of injection molding for the connection rod 10 can be improved.

As shown in Fig. 1 and Fig. 3, in this embodiment, a mounting port 201 is provided on the guide bracket 20. The mounting port 201 is a circular hole. The mounting port 201 passes through the guide bracket 20 in a direction of plumb-line perpendicular to an extension direction of the connecting rod component. That is, in this embodiment, the mounting port 201 passes through the guide bracket 20 along the thickness direction of the guide bracket 20, and the mounting port 201 is configured to mount the valve core component 30. The mounting port 201 is simple in structure and easy to assemble the valve core component 30.

In this embodiment, the first communication hole 012 and the second communication hole 013 are respectively in communication with a side portion of the valve cavity. The valve core component 30 includes a first valve core 31, a second valve core 32, and an elastic portion 33. The first valve core 31 and the second valve core 32 abut against each other. The elastic portion 33 is disposed between the first valve core 31 and the second valve core 32, and exerts an acting force on the first valve core 31 and the second valve core 32 to be away from each other. In this way, it can be convenient to assemble the valve core component 30, and a sealing effect of the first valve core 31 and the second valve core 32 on communication holes of the electric valve can be ensured.

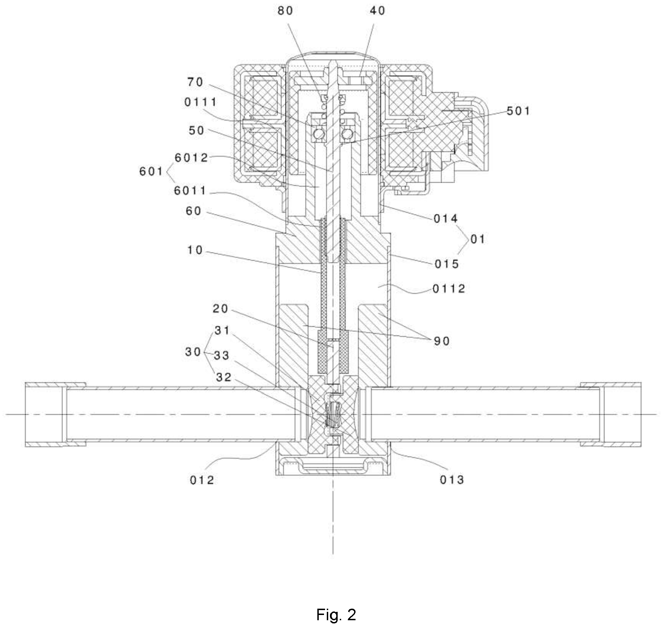

As shown in Fig. 1 and Fig. 2, further, the electric valve further includes a valve cover 60. The valve cover 60 is disposed in the valve cavity, where the connection rod 10 is in guiding fit with the valve cover 60. Setting of the valve cover 60 can guide movement of the connection rod 10, thereby reducing a possibility of shaking in a moving process of the connection rod 10, improving smoothness of the connection rod 10 in the moving process, improving smoothness of driving movement of the valve core component 30 by the connecting rod component, and improving stability when the valve is opened and closed.

In this embodiment, a through hole 601 is provided on the valve cover 60. The through hole 601 passes through the valve cover 60 along the axial direction of the valve cavity. The connection rod 10 is movably inserted into the through hole 601. The connection rod 10 is in guiding fit with the through hole 601. The through hole 601 is simple in structure and good in guiding effect.

In this embodiment, a first anti-rotation structure is disposed on a sidewall of the through hole 601. A second anti-rotation structure is disposed on a sidewall of the connection rod 10. The first anti-rotation structure is in anti-rotation fit with the second anti-rotation structure. Setting of the first anti-rotation structure and the second anti-rotation structure can ensure that the connecting rod component can only move along the axial direction of the valve cavity, thereby avoiding a case in which the connecting rod component rotates in the moving process, and improving stability of the connecting rod component in the moving process.

Specific forms of the anti-rotation structure and the second anti-rotation structure are not limited in this solution.

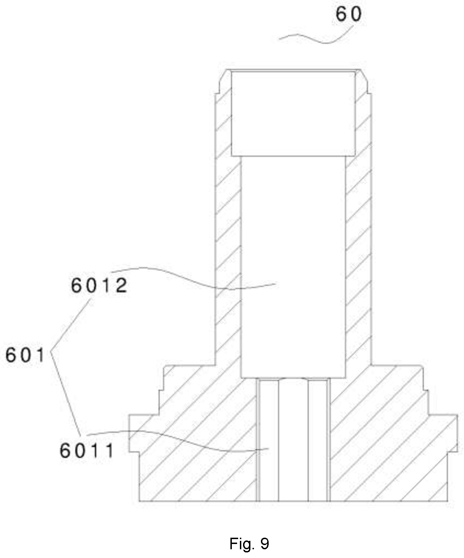

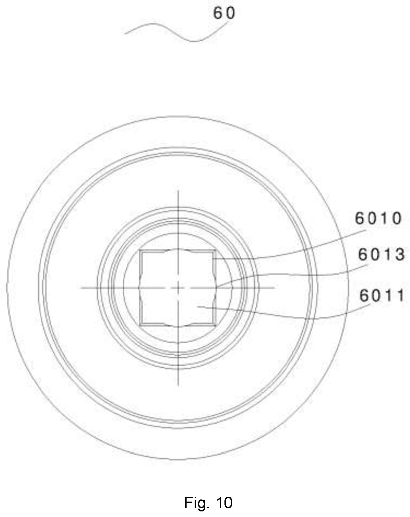

As shown in Fig. 1, Fig. 3, Fig. 9, and Fig. 10, in this embodiment, a first anti-rotation surface 6010 is disposed on a sidewall of the through hole 601, the first anti-rotation surface 6010 is a flat surface, and an extension direction of the first anti-rotation surface 6010 is consistent with that of the through hole 601. A second anti-rotation surface 1001 is disposed on a sidewall of the connecting rod 11, an extension direction of the second anti-rotation surface 1001 is consistent with that of the connection rod 10, and the first anti-rotation surface 6010 is in anti-rotation fit with the second anti-rotation surface 1001.

In this embodiment, a shape of the through hole 601 matches that of the connecting rod 11. In an embodiment, a shape of an outer contour of a cross section of the connecting rod 11 is a polygon, and a plurality of outer sidewalls of the connecting rod 11 form a plurality of first anti-rotation surfaces. In this way, a structure is simple, and it is convenient to implement guiding and anti-rotation of the through hole 601 for the connecting rod 11.

Further, the valve body 01 includes a first sleeve 014 and a second sleeve 015. Open ends of the first sleeve 014 and the second sleeve 015 are disposed opposite to each other. The valve cavity is formed between the first sleeve 014 and the second sleeve 015. The valve cover 60 is of an integral structure. The valve cover 60 is located between the first sleeve 014 and the second sleeve 015. An end of the valve cover 60 is inserted at an opening of the first sleeve 014 and is connected to the first sleeve 014, and an other end of the valve cover 60 is inserted at an opening of the second sleeve 015 and is connected to the second sleeve 015. The valve cover 60 separates the valve cavity into a first chamber 0111 and a second chamber 0112 that are distributed along the axial direction.

In this embodiment, a first stepped structure and a second stepped structure that are spaced apart are disposed on an outer sidewall of the valve cover 60 along the axial direction of the valve cover 60. The first stepped structure is in limiting fit with an end face of the open end of the first sleeve 014, and the second stepped structure is in limiting fit with an end face of the open end of the second sleeve 015. In this way, assembly accuracy between the first sleeve 014 and the valve cover 60 can be improved, and assembly accuracy between the second sleeve 015 and the valve cover 60 can be improved.

In an embodiment, the rotor component 40 is located in the first chamber 0111, and the valve core component 30 is located in the second chamber 0112. In this embodiment, the rotor component 40 is located in the first sleeve 014, and the valve core component 30 is located in the second sleeve 015. In this way, the structure is simple, and a number of parts of the electric valve can be reduced as much as possible, and assembly convenience is higher.

Further, a first balance channel is formed between the connection rod 10 and the through hole 601, and two ends of the first balance channel are respectively in communication with the first chamber 0111 and the second chamber 0112. Setting of the first balance channel can prevent the rotor component 40 from suffocating in the first chamber 0111 to generate a differential pressure, thereby improving flexibility of rotation of the rotor component 40.

A specific mode of the first balance channel is not limited in this solution.

As shown in Fig. 1, Fig. 9, and Fig. 10, in an embodiment of this solution, a groove structure 6013 is provided on a sidewall of the through hole 601. The groove structure 6013 is provided in correspondence with the first anti-rotation surface 6010. An extension direction of the groove structure 6013 is consistent with that of the through hole 601. An end of the groove structure 6013 is in communication with the first chamber 0111, and an other end of the groove structure is in communication with the second chamber 0112. The groove structure 6013 forms the first balance channel.

In some other embodiments of this solution, a diversion groove is provided on a sidewall of the connecting rod 11. The diversion groove is provided in correspondence with the second anti-rotation surface 1001. An extension direction of the diversion groove is consistent with that of the connecting rod 11. An end of the diversion groove is in communication with the first chamber 0111, and an other end of the diversion groove is in communication with the second chamber 0112. The diversion groove forms the first balance channel.

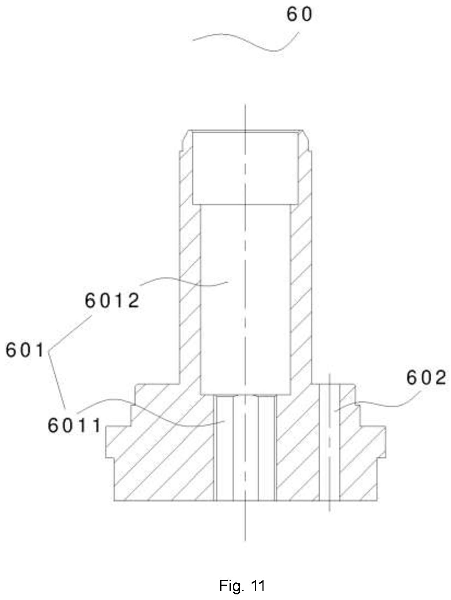

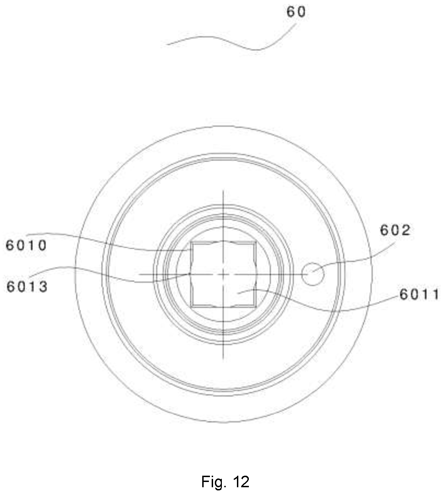

As shown in Fig. 11 and Fig. 12, in some other embodiments of this solution, a second balance channel 602 is further provided on the valve cover 60. The second balance channel 602 is disposed eccentrically to the through hole 601. Two ends of the second balance channel 602 are respectively in communication with the first chamber 0111 and the second chamber 0112. Setting of the second balance channel 602 can prevent the rotor component 40 from suffocating in the first chamber 0111 to generate a differential pressure, thereby improving flexibility of rotation of the rotor component 40. In addition, the foregoing setting facilitates machine shaping of the second balance channel 602.

As shown in Fig. 1 and Fig. 2, in this embodiment, the through hole 601 includes a guide hole 6011 and an avoidance hole 6012 that are in communication sequentially in a direction from the connection rod 10 to the connecting member 50. An aperture size of the guide hole 6011 is smaller than that of the avoidance hole 6012. The guide hole 6011 is in guiding fit with the connection rod 10. An end that is of the connecting member 50 and that is away from the rotor component 40 passes through the avoidance hole 6012 and is in threaded fit with the connection rod 10.

Further, the electric valve further includes a bearing 70. The bearing 70 is disposed in the avoidance hole 6012, where the connecting member 50 is rotatably inserted into the bearing 70, and an outer peripheral surface of the connecting member 50 is connected to an inner ring of the bearing 70. Setting of the bearing 70 can implement a connection to the connecting member 50, thereby reducing a possibility of shaking of the connecting member 50, and improving stability of a rotation process of the connecting member 50. In addition, rotary friction of the connecting member 50 can be reduced, thereby improving transmission efficiency.

In some embodiments, the valve cover 60 includes a first section and a second section that are connected to each other along the axial direction. A diameter of the first section is less than that of the second section. The first section is inserted into the first sleeve 014, and an end that is of the first section and that is away from the second section is inserted into the rotor component 40. The open end of the first sleeve 014 is sleeved at an end that is of the second section and that is connected to the first section, and the open end of the second sleeve 015 is sleeved at an end that is of the second section and that is away from the first section. In this way, the number of parts of the electric valve can be further reduced, thereby improving structural compactness of the electric valve.

As shown in Fig. 1 and Fig. 2, in this embodiment, a limiting portion 501 is disposed on the connecting member 50. The electric valve further includes an elastic component 80. The elastic component 80 is disposed on the connecting member 50, where the bearing 70 is located between the elastic component 80 and the limiting portion 501. The elastic component 80 and the limiting portion 501 respectively abut against the bearing 70. The elastic component 80, the bearing 70, and the limiting portion 501 are distributed sequentially along a direction from the connecting member 50 to the connection rod 10. The elastic component 80 is configured to exert an elastic force to the connecting member 50, so that the limiting portion 501 on the connecting member 50 is in contact with the bearing 70. In this way, the elastic component 80 is configured to exert an acting force on the bearing 70, so that the bearing 70 is always in abutting fit with the limiting portion 501, and a gap between the bearing 70 and the limiting portion 501 is eliminated, so that the connecting member 50 is restrained and limited in the axial direction, that is, the connecting member 50 has only a degree of freedom in a rotational direction, and a possibility that the connecting member 50 moves in the axial direction is reduced or avoided.

In an embodiment, the elastic component 80 includes a spring and a snap spring component that are connected to each other. The spring is sleeved on the connecting member 50. An end of the spring abuts against an end face of an end that is of the bearing 70 and that is away from the connection rod 10. The snap spring component is disposed at an end that is of the spring and that is away from the bearing 70. The snap spring component is snap-fitted to the connecting member 50, and the snap spring component abuts against the end that is of the spring and that is away from the bearing 70.

Further, the first communication hole 012 and the second communication hole 013 are respectively in communication with a side portion of the second chamber 0112. The electric valve further includes a valve seat 90, where the valve seat 90 is disposed in the second chamber 0112, and the valve seat 90 is in guiding fit with the valve core component 30. Setting of the valve seat 90 can guide movement of the valve core component 30, thereby further improving smoothness of the valve core component 30.

In this embodiment, the valve seat 90 is disposed in the second chamber 0112. The valve seat 90 includes a first seat body and a second seat body. The first seat body and the second seat body are respectively disposed in correspondence with the first communication hole 012 and the second communication hole 013. A first opening is provided on the first seat body, and a second opening is provided on the second seat body. The first opening and the second opening are respectively in communication with the first communication hole 012 and the second communication hole 013. A guide space is formed between the first seat body and the second seat body, and the valve core component 30 is movably disposed in the guide space and is in guiding fit with the guide space.

Further, the connecting rod component is in limiting fit with the valve cover 60, so as to limit a displacement travel of the connecting rod component in the axial direction of the valve cavity.

As shown in Fig. 1 to Fig. 3, in an embodiment, a step plane between the connecting rod 11 and the connecting block 12 forms a first limiting structure 103, where the first limiting structure 103 is configured to be in abutting fit with an end face of an end that is of the valve cover 60 and that is close to the valve core component 30, so as to limit the displacement travel of the connecting rod component in the axial direction of the valve cavity. In this way, the structure is simple and no additional limiting structure needs to be set.

Further, along the axial direction of the valve cavity, an end that is of the guide bracket 20 and that is away from the connection rod 10 protrudes out of the valve core component 30, and an end face of an end that is of the guide bracket 20 and that is away from the connection rod 10 forms a second limiting structure 203 and is configured to be in limiting fit with an end that is of the valve cavity and that is away from the rotor component 40. In this way, a case in which an end face of the valve core component 30 is in contact with an end that is of the valve cavity and that is away from the rotor component 40 can be avoided, and a case in which the valve core component 30 is deformed due to extrusion is avoided.

It should be noted that terms used herein are for a purpose of describing particular embodiments only and are not intended to limit exemplary embodiments in accordance with the present disclosure. As used herein, a singular form is intended to include the plural form as well, unless the context clearly indicates otherwise, and further it should be understood that the terms "includes" and/or "including" when used in the present description, specify the presence of features, steps, operations, devices, components and/or combinations thereof.

Unless specifically stated otherwise, the relative arrangement of components and steps, numerical expressions and numerical values set forth in these embodiments do not limit the scope of the present disclosure. Moreover, it should be understood that for the convenience of description, the dimensions of the parts shown in the drawings are not drawn according to the actual proportional relationship. Techniques, methods and devices known to a person of ordinary skill in the relevant art may not be discussed in detail, but the techniques, methods and devices shall be considered as a part of the description to be granted, where appropriate. In all examples shown and discussed herein, any specific values shall be construed as exemplary only and not as limiting. Therefore, other examples of the exemplary embodiments may have different values. It should be noted that similar numerals and letters represent similar items in the following figures, and thus once an item is defined in a figure, it need not be further discussed in subsequent figures.

In the description of the present disclosure, it should be understood that, orientations or position relationships indicated by directional terms such as "front, back, upper, lower, left, right", "lateral, vertical, perpendicular, horizontal", "top, bottom" and the like are orientations or position relationships based on accompanying drawings and are only for the convenience of illustration of the specification and simplicity of illustration, unless specified to the contrary, the directional terms do not explicitly or implicitly indicate that apparatuses or components referred to herein must have a certain direction or be configured or operated in a certain direction, and therefore cannot be understood as limitations to the present disclosure. The directional terms "internal, external" refer to internal and external relative to the outline of each component itself.

In order to facilitate description, a spatial relative term may be used here, such as "over", "above", "on an upper surface" and "on", to describe a spatial location relation between a device or a feature shown in the drawing and other devices or other features. It is to be understood that the spatial relative term aims at including different orientations of the device during use or operation outside the orientation described in the drawing. For example, if the device in the drawing is inverted, it may be described as that the device "above other devices or other structures" or "over other devices or other structures" shall be positioned "under other devices or other structures" or "below other devices or other structures". Therefore, an exemplary term "above" may include two orientations: "above" and "under". As an alternative, the device may be positioned with other different modes (90° rotation or positioned at other orientations), and the spatial relative description used here needs to be explained correspondingly.

In addition, it should be noted that, using words such as "first" and "second" to define components is merely for the purpose of distinguishing the components. Unless otherwise stated, the foregoing words do not have special meanings and cannot be construed as any limitations on the protection scope of the present disclosure.

The content above merely relates to some embodiments of the present disclosure and is not intended to limit the present disclosure. For a person skilled in the art, the present disclosure may have various modifications and variations. Any modifications, equivalent replacements, improvements, etc. made within the spirit and principle of the present disclosure shall all belong to the scope of protection of the present disclosure.

## Claims

1. An electric valve, comprising:
a valve body (01), provided with a valve cavity, a first communication hole (012), and a second communication hole (013), wherein the first communication hole (012) and the second communication hole (013) are respectively in communication with the valve cavity;
a valve core assembly, comprising a connecting rod component and a valve core component (30), wherein the connecting rod component is movably disposed in the valve cavity; the valve core component (30) is mounted on the connecting rod component, and the valve core component (30) moves in the valve cavity along with the connecting rod component, so as to communicate the first communication hole (012) with the second communication hole (013) or partition the first communication hole from the second communication hole;
a rotor component (40), located at an end that is of the connecting rod component and that is away from the valve core component (30), wherein the rotor component (40) is rotatably disposed in the valve cavity; and
a connecting member (50), wherein an end of the connecting member (50) is fixedly disposed on the rotor component (40), and an other end of the connecting member (50) is in threaded fit with the connecting rod component, so as to drive the connecting rod component to move along an axial direction of the valve cavity in the valve cavity, and the connecting member (50) is limited in the axial direction of the valve cavity relative to the valve body (01).

2. The electric valve according to claim 1, wherein the connecting rod component comprises a connection rod (10) and a guide bracket (20) that are sequentially arranged in a direction from the rotor component (40) to the valve core component (30), the connection rod (10) is fixedly connected to the guide bracket (20), the connection rod (10) is in threaded fit with the connecting member (50), and the valve core component (30) is mounted on the guide bracket (20).

3. The electric valve according to claim 2, wherein the electric valve further comprises:
a valve cover (60), disposed in the valve cavity, wherein the connection rod (10) is in guiding fit with the valve cover (60).

4. The electric valve according to claim 3, wherein a through hole (601) is provided on the valve cover (60), the through hole (601) passes through the valve cover (60) along the axial direction of the valve cavity, the connection rod (10) is movably inserted into the through hole (601), and the connection rod (10) is in guiding fit with the through hole (601).

5. The electric valve according to claim 4, wherein a first anti-rotation structure is disposed on a sidewall of the through hole (601), a second anti-rotation structure is disposed on a sidewall of the connection rod (10), and the first anti-rotation structure is in anti-rotation fit with the second anti-rotation structure.

6. The electric valve according to claim 4, wherein the valve cover (60) separates the valve cavity into a first chamber (0111) and a second chamber (0112) that are distributed along the axial direction, the rotor component (40) is located in the first chamber (0111), and the valve core component (30) is located in the second chamber (0112).

7. The electric valve according to claim 6, wherein
a first balance channel is formed between the connection rod (10) and the through hole (601), and two ends of the first balance channel are respectively in communication with the first chamber (0111) and the second chamber (0112); and/or
a second balance channel (602) is provided on the valve cover (60), the second balance channel (602) is disposed eccentrically to the through hole (601), and two ends of the second balance channel (602) are respectively in communication with the first chamber (0111) and the second chamber (0112).

8. The electric valve according to claim 4, wherein the through hole (601) comprises a guide hole (6011) and an avoidance hole (6012) that are in communication sequentially in a direction from the connection rod (10) to the connecting member (50), an aperture size of the guide hole (6011) is smaller than an aperture size of the avoidance hole (6012), the guide hole (6011) is in guiding fit with the connection rod (10), and an end of the connecting member (50) away from the rotor component (40) is inserted into the guide hole (6011) through the avoidance hole (6012) and is in threaded fit with the connection rod (10).

9. The electric valve according to claim 8, wherein the electric valve further comprises:
a bearing (70), disposed in the avoidance hole (6012), wherein the connecting member (50) is rotatably inserted into the bearing (70), and an outer peripheral surface of the connecting member (50) is connected to an inner ring of the bearing (70).

10. The electric valve according to claim 9, wherein a limiting portion (501) is disposed on the connecting member (50), and the electric valve further comprises:
an elastic component (80), disposed on the connecting member (50), wherein the bearing (70) is located between the elastic component (80) and the limiting portion (501), the elastic component (80) and the limiting portion (501) respectively abut against the bearing (70), and the elastic component (80) is configured to exert an elastic force to the connecting member (50), so that the limiting portion (501) on the connecting member (50) abuts against the bearing (70).

11. The electric valve according to claim 1, wherein the electric valve further comprises:
a valve seat (90), disposed in the valve cavity, wherein the valve seat (90) is in guiding fit with the valve core component (30).

12. The electric valve according to claim 2, wherein a mounting port (201) is provided on the guide bracket (20), the valve core component (30) comprises a first valve core (31) and a second valve core (32) that are mutually independent, the first valve core (31) and the second valve core (32) are respectively mounted in the mounting port (201), the first valve core (31) abuts against the second valve core (32), the first valve core (31) is disposed in correspondence with the first communication hole (012), and the second valve core (32) is disposed in correspondence with the second communication hole (013).

13. The electric valve according to claim 3, wherein the connecting rod component is in limiting fit with the valve cover (60), so as to limit a displacement travel of the connecting rod component in the axial direction of the valve cavity.

14. The electric valve according to claim 13, wherein a step plane is disposed on a sidewall of the connecting rod component, and the step plane is configured to be in limiting fit with the valve cover (60).

15. The electric valve according to claim 2, wherein the first communication hole (012) and the second communication hole (013) are respectively in communication with a side portion of the valve cavity, and along the axial direction of the valve cavity, an end of the guide bracket (20) away from the connection rod (10) protrudes out of the valve core component (30), and the end of the guide bracket (20) away from the connection rod (10) is configured to be in limiting fit with an end of the valve cavity away from the rotor component (40).

16. The electric valve according to claim 2, wherein a first end of the connection rod (10) is injection-molded onto the guide bracket (20).

17. The electric valve according to claim 16, wherein a mounting groove (101) is provided on an end face of the first end of the connection rod (10), and an end of the guide bracket (20) is inserted into the mounting groove (101) and is connected to the connection rod (10).

18. The electric valve according to claim 17, wherein a snap-fit structure is disposed between the connection rod (10) and the guide bracket (20), and the connection rod (10) and the guide bracket (20) are snap-fitted by using the snap-fit structure.

19. The electric valve according to claim 18, wherein the snap-fit structure comprises:
a snap-fit hole (202), provided on an end that is of the guide bracket (20) and that is inserted into the mounting groove (101); and
a snap-fit portion (102), disposed in the mounting groove (101) and integrally formed with the connection rod (10), wherein the snap-fit portion (102) is inserted into the snap-fit hole (202) and is snap-fitted to the snap-fit hole (202).

20. The electric valve according to claim 19, wherein a size of the snap-fit hole (202) along a length direction of the connecting rod component is greater than a size of the snap-fit hole (202) along a width direction of the connecting rod component.

21. The electric valve according to claim 17, wherein the connection rod (10) comprises a connecting rod (11) and a connecting block (12) that are sequentially arranged along the length direction, a cross-sectional area of the connecting block (12) is greater than a cross-sectional area of the connecting rod (11), and the mounting groove (101) is provided on an end face of an end of the connecting rod (11) away from the connecting rod (12).

22. The electric valve according to claim 16, wherein an end of the connection rod (10) distal from the guide bracket (20) is provided with a threaded hole, and an end of the connecting member (50) distal from the rotor component (40) is inserted into the threaded hole and is in threaded fit with the connection rod (10).
